Europäisches Patentamt

(19) European Patent Office

Office européen des brevets

(11) Numéro de publication: **0 028 791**
**A1**

(12) ## DEMANDE DE BREVET EUROPEEN

(21) Numéro de dépôt: 80106750.5

(22) Date de dépôt: 03.11.80

(51) Int. Cl.³: **H 02 G 5/00**

(30) Priorité: 08.11.79 FR 7927544

(43) Date de publication de la demande:
20.05.81 Bulletin 81/20

(84) Etats Contractants Désignés:
AT BE CH DE FR GB IT LI LU NL SE

(71) Demandeur: COMPAGNIE INDUSTRIELLE DES
TELECOMMUNICATIONS CIT-ALCATEL S.A. dite:
12, rue de la Baume
F-75008 Paris(FR)

(72) Inventeur: Munier, Jean-François
16, Avenue Jules Ferry
F-92160 Antony(FR)

(74) Mandataire: Weinmiller, Jürgen et al,
Zeppelinstrasse 63
D-8000 München 80(DE)

(54) **Barre d'alimentation électrique.**

(57) Barre d'alimentation formée de conducteurs en ruban séparés par des bandes isolantes, l'ensemble conducteur bandes isolantes étant assemblé sur un support permettant la fixation dans un bâti, chaque conducteur comportant des cosses d'arrivée et de distribution de courant.

Elle comporte des moyens (10) pour isoler les conducteurs (6) du support (1), et un capot (2) de positionnement et de maintien des conducteurs et des bandes isolantes sur le support.

Application notamment dans les industries électriques et les télécommunications.

FIG.1

Barre d'alimentation électrique

L'invention concerne une barre d'alimentation électrique formée de conducteurs en ruban séparés par des bandes isolantes, l'ensemble conducteur-bandes isolantes étant assemblé sur un support permettant la fixation dans un bâti, chaque conducteur comportant des cosses d'arrivée et de distribution de courant, pour l'alimentation d'équipements électriques disposés dans des bâtis. Elle s'applique notamment au domaine des industries électriques et des industries de l'informatique, de l'automatisme et des télécommunications. Elle est applicable de préférence à la réalisation des barres omnibus permettant la distribution des potentiels d'alimentation au niveau des alvéoles des bâtis des télécommunications.

Les barres utilisées dans les bâtis des circuits imprimés sont soit des barres horizontales distribuant l'alimentation à toutes les cartes d'un alvéole, soit des barres verticales d'alimentation des alvéoles, et des barres dites minibus assurant des liaisons entre points d'une même carte.

Ces diverses barres sont souvent constituées par des conducteurs formés chacun d'un ruban métallique rectiligne portant un certain nombre de cosses de connexion. Les conducteurs sont en général séparés par un ruban isolant.

Dans la technique connue, les barres sont souvent formées de conducteurs plans collés sur le ruban isolant qui les sépare, l'ensemble des conducteurs étant ensuite recouvert d'une couche de résine par surmoulage.

Un procédé décrit dans le brevet français n° 2.407.588 consiste à immerger l'ensemble des conducteurs collés dans un bain de résine fluidisé, et à faire un calibrage de l'épaisseur de la barre enrobée dans le four qui assure la polymérisation de la résine.

Le collage du conducteur sur un ruban isolant est une opération longue et qui ne se justifie que dans le cas où l'isolant doit être très mince pour obtenir une certaine capacité entre deux conducteurs voisins. D'autre part le moulage ou l'enrobage de barres de très grande longueur nécessite des installations coûteuses.

L'invention propose un type de barre bon marché et de fabrication simple qui est applicable dans tous les cas où aucune tolérance de capacité entre conducteurs n'est imposée.

L'invention a pour objet une barre d'alimentation électrique formée de conducteurs en ruban séparés par des bandes isolantes, l'ensemble conducteur-bandes isolantes étant assemblé sur un support permettant la fixation dans un bâti, chaque conducteur comportant des cosses d'arrivée et de distribution de courant, caractérisée par le fait qu'elle comporte des moyens pour isoler l'un des bords des conducteurs du support, et un capot assurant le maintien par pression des ensembles conducteurs-bandes isolantes sur le support et le positionnement longitudinal des conducteurs.

Une forme de réalisation de l'invention et une variante vont être décrites ci-dessous à titre d'exemple à l'aide des figures annexées :

- la figure 1 est une vue en coupe transversale d'une barre selon l'invention au niveau d'un capot de fixation

- la figure 2 montre une partie d'un conducteur de la barre selon la figure 1 à échelle réduite

- la figure 3 montre une partie d'une bande isolante de la même barre

- la figure 4 montre une extrêmité de ladite barre, vue du côté où sont situées les cosses d'arrivée et de départ de courant

- la figure 5 indique la même barre que la figure précédente, vue de côté

- les figures 6, 7, 8 représentent un bouchon d'extrêmité de ladite barre

- la figure 9 montre un détail de cette barre avec des moyens de positionnement des capots par rapport au support

- la figure 10 montre un détail de fixation d'un câble sur une cosse de ladite barre,

- la figure 11 représente une variante de la figure 1, avec un capot plat maintenu par des brides.

Les figures représentent des barres d'alimentation de type vertical c'est-à-dire recevant diverses sources d'alimentation d'une station d'énergie et distribuant ces alimentations au niveau de chaque alvéole d'un bâti d'équipements électroniques.

Cette barre est entièrement formée d'éléments assemblés mécaniquement sans soudage ni collage.

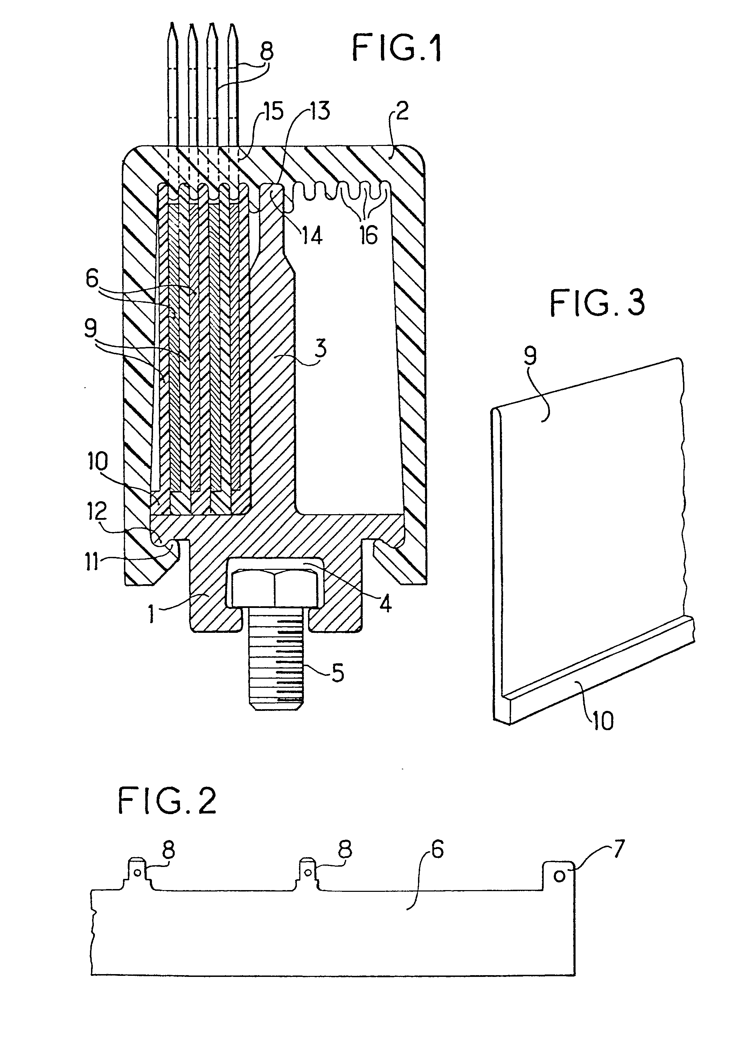

Le support des conducteurs de la barre selon les figures 1 à 10 est formé par un profilé métallique 1 sur lequel des conducteurs en ruban et des bandes isolantes intermédiaires sont maintenus à l'aide d'un capot en matière isolante 2. Le profilé 1 a la forme générale d'un T avec barre centrale 3, les conducteurs étant disposés de part et d'autre de la barre centrale 3 du T. Pour la fixation sur un bâti, le profilé 1 comporte dans sa partie opposée à la barre centrale 3 une glissière 4 dans laquelle peuvent coulisser librement les têtes de boulons de fixation 5. Ceci permet de fixer les barres d'alimentation sur des bâtis dans lesquels les trous de fixation sont réalisés avec une tolérance large, et d'autre part d'utiliser les barres d'alimentation pour divers types de bâtis sans modification.

Les conducteurs, découpés par exemple dans des feuilles de cuivre, ont une forme générale rectangulaire et portent sur un de leur grand côté des cosses de raccordement de deux types (figure 2) :

- les conducteurs 6 comportent à chaque extrêmité une cosse d'arrivée d'alimentation 7 sur lesquelles les cosses d'entrée du courant sont fixées par vis et écrous ;

- ils comportent également des cosses de distribution de courant 8. La distance entre deux cosses 8 voisines est compatible avec la grille d'implantation au pas normalisé de 2,54 cm.

Les isolants disposés entre les conducteurs 6 (figure 3) sont formés d'une plaque rectangulaire ou bande 9 portant sur un de ses grands côtés un talon 10 de section rectangulaire. L'épaisseur du talon est égale à celle des conducteurs. Dans une barre assemblée (figure 1) les isolants sont disposés de manière à isoler les conducteurs du profilé 1 et de l'extérieur, et l'ensemble est maintenu par le capot 2 d'une manière qui sera décrite plus loin.

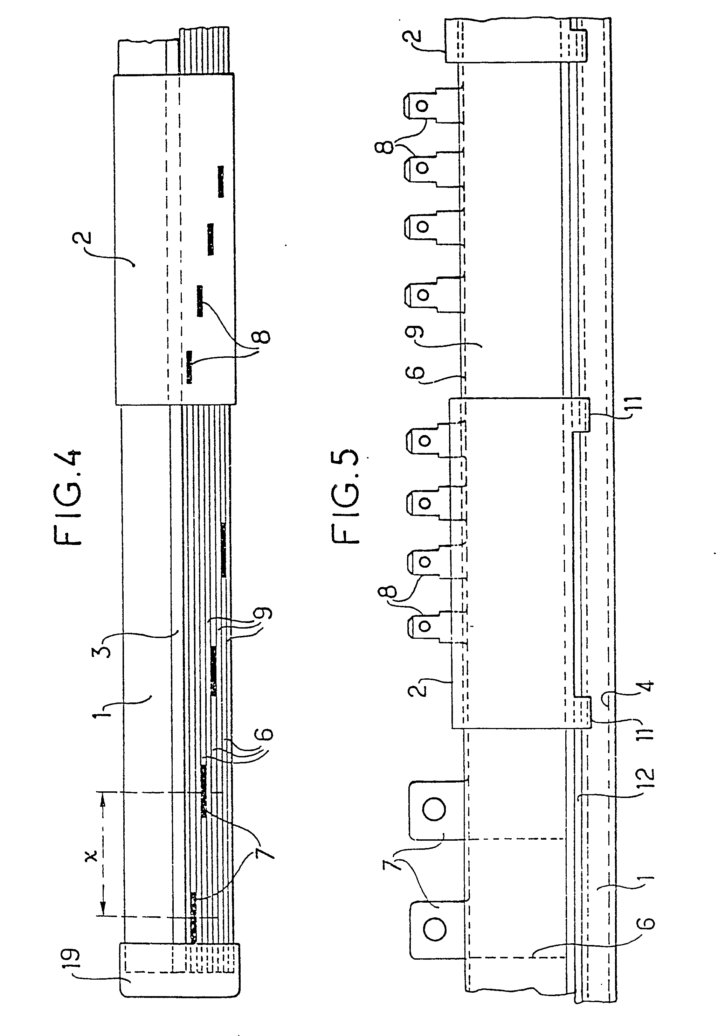

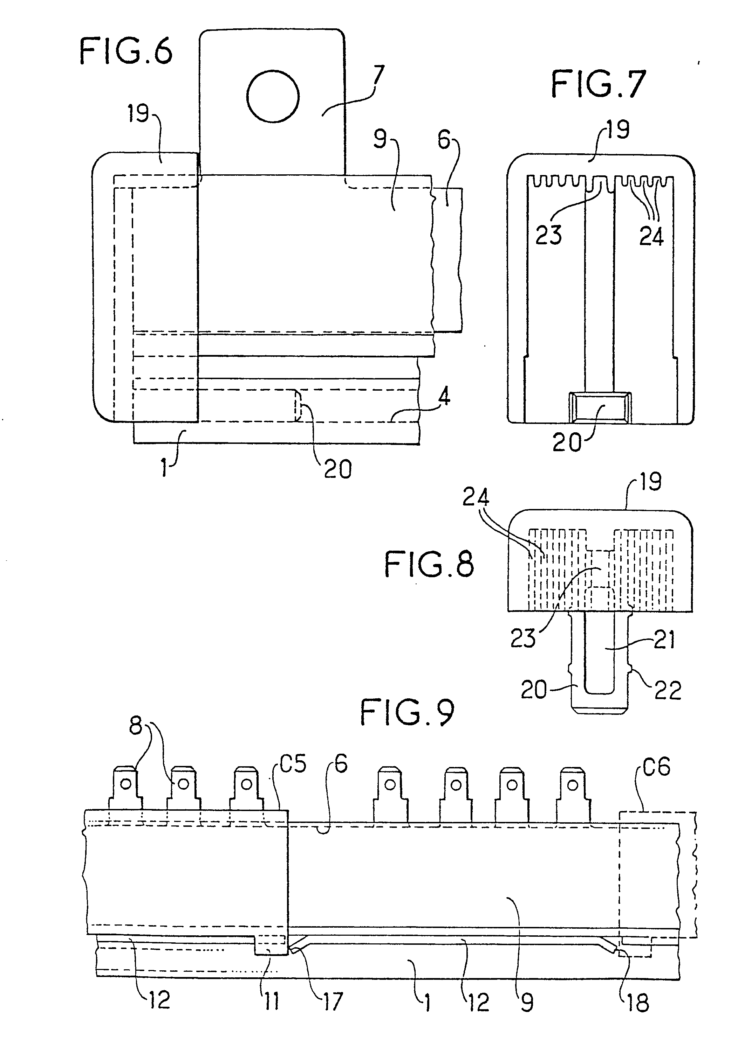

Comme il ressort des figures 4 et 5 les cosses 7 des conducteurs d'une même barre d'alimentation sont décalées axialement de manière à éviter les risques de court-circuit et faciliter le positionnement des connexions. Il en est de même des cosses 8 qui sont régulièrement espacées sur un même conducteur, et sur la barre complète il apparaît des groupes de cosses régulièrement espacées. On place, d'un même côté du profilé, quatre conducteurs, ce qui fait apparaître des groupes de quatre cosses.

La barre d'alimentation est constituée avec seulement deux types de conducteurs de la manière suivante :

- les conducteurs de la barre d'alimentation sont décalés de manière à respecter l'écartement x entre les cosses 7. Les bandes isolantes ont donc une longueur égale à celle de la barre d'alimentation, mais les conducteurs sont un peu plus courts.

- Pour constituer une barre d'alimentation de quatre conducteurs on utilise deux conducteurs en disposant ces deux conducteurs dans des sens opposés. De cette manière on peut respecter l'écartement des cosses 8 d'un même groupe entre elles, la distance entre les groupes de cosses, et la distance entre ces groupes et l'extrêmité de la barre d'alimentation.

Les capots d'assemblage 2 sont placés au niveau des groupes de cosses 8. En effet les conducteurs étant protégés de l'extérieur par une bande isolante 9, il n'est pas nécessaire d'avoir une protection par capot sur toute la longueur. On utilise un capot tous les deux groupes de cosses 8. Le capot a une section générale en U ; il est accroché sur le profilé 1 de chaque côté par deux ergots souples 11, pour obtenir le blocage. Le profilé comporte lui-même un rebord 12 sur lequel sont engagés les ergots 11 par déformation élastique du capot. Le fond du capot prend appui sur le profilé par une encoche 13 dans laquelle s'engage l'extrêmité 14 de la barre centrale 3 du profilé. Le fond du capot est également percé de 4 fentes 15 permettant le passage des cosses 8 des conducteurs.

Le capot sert comme on l'a vu à maintenir l'ensemble des éléments en place. Au moment de l'assemblage les trous 15 servent de repères pour positionner les conducteurs les uns par rapport aux autres. Il permet également de maintenir l'écartement entre les bandes isolantes 9. Pour cela le fond du capot comporte des rainures 16 dans lesquelles s'engage un bord des bandes isolantes 9. Le bord des bandes 9 est un peu plus haut que les bords des conducteurs 6 de manière à s'engager dans les fentes 16. Cette disposition a également pour avantage d'éviter les risques de court-circuit entre conducteurs voisins par contournement de l'isolant au niveau des bords, le trajet du pontage étant considérablement allongé.

Enfin, le capot a un rôle de maintien longitudinal de la position des concucteurs par rapport au profilé support. En effet pour des raisons de simplicité de réalisation, on a évité tout moyen de liaisons mécaniques directes entre les conducteurs, les bandes isolantes et le support. Le positionnement est obtenu par de simples cisaillages (figure 9) réalisés dans les bords du profilé au niveau où doivent se placer les ergots 11 des capots. On voit sur la figure 9 comment est réalisé le blocage au niveau du 5ème capot C5 et du 6ème capot C6, le bord droit du capot C5 empêchant un glissement des conducteurs vers la droite par rapport au support en butant contre le cisaillement 17 du support, et le bord gauche du 6ème capot empêchant le glissement vers la gauche par butée contre le cisaillement 18.

Au niveau des extrémités, la barre est protégée par des capuchons 19 fixés par une patte 20 qui s'engage dans la glissière 4 du profilé 1 (figures 6, 7 et 8). Pour obtenir une fixation souple, la patte 20 comporte un évidement central 21, et des ergots 22 de frottement contre les parois de la glissière du profilé. Pour obtenir un bon positionnement par rapport aux conducteurs et aux bandes isolantes, le capuchon 19 comporte une rainure 23, analogue à la rainure 13 du capot, dans laquelle vient s'engager l'extrêmité du profilé, et des rainures 24, analogues aux rainures 16, dans lesquelles viennent s'engager des extrêmités des bandes isolantes.

Un dispositif a été prévu pour faciliter la mise en place des fils amenant l'alimentation de l'extérieur sur les cosses 7 des barres. En effet ces liaisons sont nécessairement effectuées sur chantiers, et souvent sur des bâtis déjà entièrement équipés. D'autres part, il est nécessaire de pouvoir retirer et remettre facilement ces fils d'alimentation, et les barres verticales sont en général situées dans un angle du bâti peu accessible. Il n'est pas possible dans bien des cas de positionner manuellement l'écrou de fixation et celui-ci doit donc être préalablement fixé sur la broche 7. La fixation par soudure présente des inconvénients, ce qui empêche notamment le traitement de surface des composants en bandes continues enroulées.

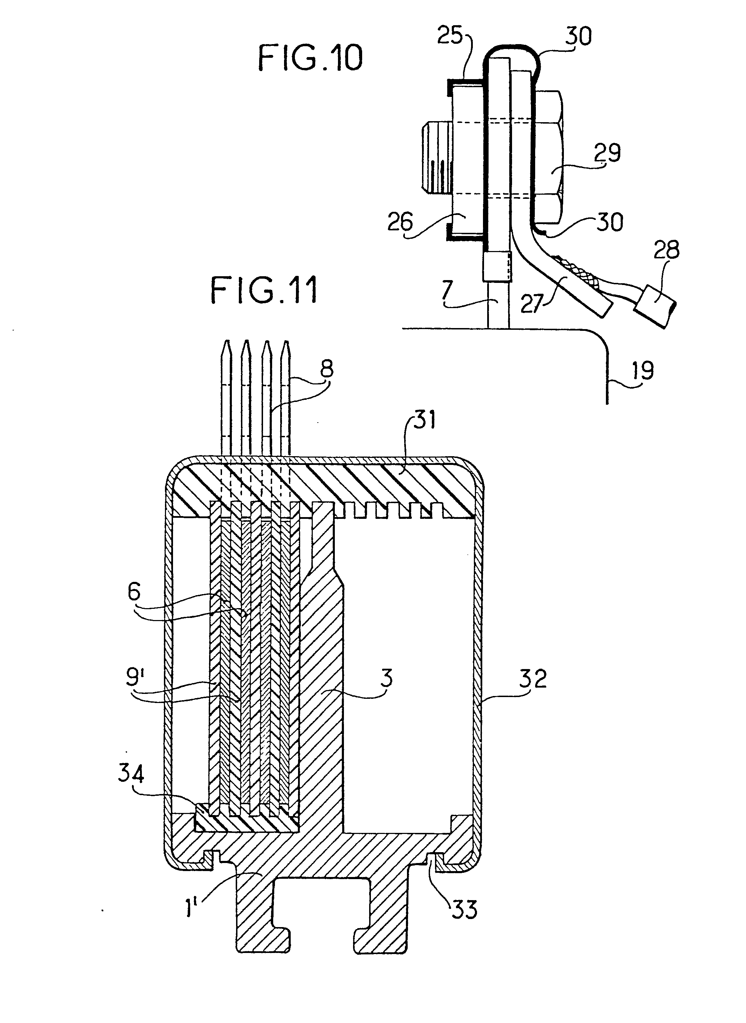

Dans cette application on utilise des écrous encagés (figure 10). Le support 25 d'un écrou 26 est simplement engagé sur la cosse 7. Le support 25 est maintenu par une patte élastique souple 30 sous laquelle est engagée une cosse 27 reliée à un fil d'alimentation 28.

Les cosses 7 et 27 sont donc en contact sur toute leur surface et pour le montage et le démontage il suffit d'avoir accès à la vis 29.

Les barres d'alimentation décrites ci-dessus sont adaptables à un grand nombre d'utilisations. On peut utiliser entre 1 et 8 conducteurs par barre, à raison de quatre conducteurs de chaque côté du profilé. Si on utilise moins de quatre conducteurs, on montera néanmoins cinq isolants de telle manière que les rebords 10 des isolants soient jointifs. On peut également utiliser des barres de différentes longueurs en prévoyant un nombre variable de groupes de cosses 8.

Bien entendu l'application décrite n'est pas limitative de l'invention. En particulier on pourra utiliser des capots ayant des fonctions équivalentes, et couvrant tout ou partie de la longueur de la barre. On pourrait aussi utiliser des bandes isolantes découpées sans talon, les fonctions des talons 10 étant réalisées par une plaque isolante rainurée qui maintiendrait un bord des conducteurs et séparerait ceux-ci du support. Naturellement on peut également prévoir une forme de profilé différente, utilisable dans le cas où il y a un nombre plus faible de conducteurs de manière à diminuer l'encombrement de l'ensemble. On peut également prévoir un capot réalisé en plusieurs parties, le fond comportant les encoches 13 et 16 étant réalisé par une plaque rainurée et les flans étant remplacés par des moyens de fixation tels que des brides. Un mode de réalisation de ce type est représenté en coupe à la figure 11. On a représenté sur cette figure un conducteur 6 maintenu entre deux bandes isolantes 9'. Les bandes isolantes 9' sont maintenues entre deux plaques rainurées 31 et 34. La plaque 31 qui joue le rôle de capot est maintenue sur le profilé par une bride 32 qui s'accroche dans des trous 33 du profilé.

REVENDICATIONS

1/ Barre d'alimentation électrique formée de conducteurs en ruban séparés par des bandes isolantes, l'ensemble conducteur-bandes isolantes étant assemblé sur un support (1) permettant la fixation dans un bâti, chaque conducteur (6) comportant des cosses d'arrivée (7) et de distribution (8) de courant, caractérisée par le fait qu'elle comporte des moyens (10, 30) pour isoler l'un des bords des conducteurs (6) du support (1), et un capot (2, 31, 32) assurant le maintien par pression des ensembles conducteurs-bandes isolantes sur le support et le positionnement longitudinal des conducteurs.

2/ Barre d'alimentation suivant la revendication 1, caractérisée par le fait que lesdits moyens pour isoler les conducteurs du support sont formés par un talon (10) des bandes isolantes (9) d'épaisseur égale à celle d'un conducteur, l'ensemble d'une bande isolante et d'un conducteur formant un ruban d'épaisseur constante et lesdits rubans d'épaisseur constante étant assemblés entre eux et appliqués sur le support par pression.

3/ Barre d'alimentation suivant la revendication 1, caractérisée par le fait que lesdits moyens pour isoler les conducteurs du support sont formés par une plaquette rainurée (30) permettant également de positionner sur un côté les conducteurs et les bandes isolantes.

4/ Barre d'alimentation suivant la revendication 1, dans laquelle ledit support est constitué par un profilé métallique dont la coupe a une forme générale en T, caractérisée par le fait que le capot (2) comporte un fond rainuré prenant appui sur la barre centrale (14) du T par une encoche (13), les rainures (16) du fond permettant de positionner sur un côté les conducteurs et les bandes isolantes, et des parois latérales du capot terminées par des ergots (11) venant s'accrocher de chaque côté sur le support (1).

5/ Barre d'alimentation suivant la revendication 4, caractérisée par le fait que le capot est percé de fentes rectangulaires (15) pour le passage des cosses (8) des conducteurs, et le positionnement des conducteurs les uns par rapport aux autres et par rapport au support.

6/ Barre d'alimentation suivant la revendication 4, caractérisée par le fait que le positionnement longitudinal du capot sur le profilé est obtenu par des butées (17, 18) réalisées dans les bords (12) du profilé.

7/ Barre d'alimentation suivant la revendication 1, dans laquelle les cosses d'arrivée du courant (7) et les cosses de distribution (8) des conducteurs voisins sont décalées d'un pas constant, mais différent pour les deux types de cosses, les deux conducteurs étant placés tête-bêche, caractérisée par le fait qu'une barre de huit conducteurs est formée de deux groupes de quatre conducteurs, que le décalage des cosses d'arrivée de courant est obtenu par décalage longitudinal des barres, et que le décalage des cosses de distribution est obtenu avec seulement deux types de conducteurs utilisés chacun en deux exemplaires dans un groupe de quatre conducteurs.

8/ Barre d'alimentation suivant la revendication 1, caractérisée par le fait que les cosses d'entrée du courant électrique sont fixées sur lesdites cosses (7) d'arrivée des conducteurs par vis et écrous imperdables.

9/ Barre d'alimentation suivant la revendication 1, caractérisée par le fait que ledit capot comprend une plaque rainurée (31) positionnant sur un côté les conducteurs et les bandes isolantes (figure 11).

0028791

FIG.1

FIG. 3

FIG.2

# FIG.4

# FIG.5

0028791

**FIG.6**

**FIG.7**

**FIG.8**

**FIG.9**

FIG.10

FIG.11

Office européen
des brevets

**RAPPORT DE RECHERCHE EUROPEENNE**

Numéro de la demande

EP 80 10 0750

| | **DOCUMENTS CONSIDERES COMME PERTINENTS** | | CLASSEMENT DE LA DEMANDE (Int. Cl. 1) |
|---|---|---|---|
| Catégorie | Citation du document avec indication, en cas de besoin, des parties pertinentes | Revendication concernée | |
| | <u>DE - A - 2 554 732</u> (LICENTIA) <br> * Pages 12 et 14; figures 3,7,8 * <br> --- | 1, 5 | H 02 G 5/00 |
| A | <u>DE - A - 2 527 813</u> (LICENTIA) <br> * Page 5 * <br> --- | 1, 2 | |
| A | <u>FR - A - 1 471 078</u> (BBC) <br> * Page 2, colonne 2 * <br> --- | 7 | |
| A, D | <u>FR - A - 2 407 588</u> (C.I.T.-ALCATEL) <br> ----- | | **DOMAINES TECHNIQUES RECHERCHES (Int. Cl. 1)** <br><br> H 02 G 5/00 <br> H 05 K 7/06 |
| | | | **CATEGORIE DES DOCUMENTS CITES** <br><br> X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cite dans la demande <br> L: document cité pour d'autres raisons <br><br> &: membre de la même famille, document correspondant |

| | Le présent rapport de recherche a été établi pour toutes les revendications | |
|---|---|---|
| Lieu de la recherche <br> La Haye | Date d'achevement de la recherche <br> 02-02-1981 | Examinateur <br> DAILLOUX |

OEB Form 1503.1   06.78